# EUROPEAN PATENT SPECIFICATION

(11) **EP 0 665 915 B1**
(45) Date of publication and mention of the grant of the patent: **16.04.1997**
(21) Application number: 93923004.1
(22) Date of filing: 15.10.1993
(51) Int. Cl.: D21H 19/14, D21H 27/10, B65D 65/42, D21H 21/36, D21H 21/54

(54) **PACKAGING MATERIALS**
VERPACKUNGSMATERIALEN
MATERIAUX D'EMBALLAGE

(30) Priority: 16.10.1992 GB 9221751
(43) Date of publication of application: 09.08.1995
(73) Proprietor: UNILEVER PLC, London EC4P 4BQ (GB); UNILEVER N.V., 3013 AL Rotterdam (NL)
(72) Inventor: ELMES, Alfred Roy, Eastham, Wirral, Merseyside L62 8DL (GB); HALL, Claire, NL-3137 PK Vlaardingen (NL); JONES, Keith, Bromborough, Wirral, Merseyside L63 0HF (GB); KHOSHDEL, Ezat, Neston, Wirral L64 9US (GB)
(74) Representative: Elliott, Peter William
(86) International application number: GB9302135
(87) International publication number: WO9409209

(56) References cited:
- EP-A- 0 252 463
- FR-A- 2 011 895
- US-A- 4 353 962
- US-A- 4 533 435
- DATABASE WPI Section Ch, Week 7021, Derwent Publications Ltd., London, GB; Class A11, AN 70-37489R & SU,A,250 665 (UKRAINIAN CELLULOSE AND P)

## Description

### FIELD OF THE INVENTION

This invention relates to fungicidally-treated packaging materials. There are a number of instances where products are packaged in a material which requires fungicidal treatment in order to inhibit mould growth on the packaging. The invention is particularly applicable to packaging materials which are of a cellulosic character such as paper and fibre board.

### BACKGROUND OF THE INVENTION AND PRIOR ART

An application which is particularly envisaged for the present invention is the wrapping employed for bars of soap and other detergent compositions in bar form. Soap is generally wrapped in a paper wrapping. Such a paper wrapping is capable of supporting a growth of a mould. The mould growth can progress to the point at which it discolours the packaging material, possibly contaminates the soap wrapped therein and in any event renders the product unattractive and unfit for sale. The problem can be particularly acute in humid tropical climates.

The present technique for inhibiting mould growth is to incorporate a fungicide into the paper or other cellulosic material used for packaging. A potential difficulty with this is that some fungicides are capable of migrating from the packaging. Migration can be outward from the packaging into the surrounding environment or inwardly into the product enclosed by the packaging. Both are undesirable, resulting in loss of fungicidal protection of the packaging. This can prevent the use of fungicides which would otherwise be desirable.

US-A-4533435 discloses the incorporation of an antimicrobial additive into the polymer binder which is used to make paper. The additive is added to the pre-formed binder and is stated to be in colloidal suspension in the binder. The binder is then used to make paper. This document teaches that the antimicrobial additive is free to migrate from the binder to adjacent fibres and to the surface of the paper. Plainly, if the antimicrobial additive is free to migrate in this way it can migrate onwards into anything which is in contact with the paper.

Fungicidal paper and board packaging material is also disclosed in US-A-3521741.

Additionally, fungicidal particles trapped or encapsulated within polymer particles are known from EP-A-0252463 and US-A-4353962.

### SUMMARY OF THE INVENTION

Surprisingly, we have now found that it is possible to confer fungicidal protection to packaging material by applying fungicide trapped in a polymer coating. The polymer coating is effective to prevent the fungicide from migrating out of the coated packaging material but, surprisingly, the fungicidal action remains even though the polymer coating is effective to immobilise the fungicide. Moreover it is not necessary to use high levels of fungicide to compensate for the fact that it is trapped in the polymer.

Accordingly therefore the invention provides fungicidally treated laminar, cellulosic packaging material characterised in that fungicide is trapped within particles of a polymer which are surface coated or printed on the packaging material, the coating containing 0.001 to 1.0 gram fungicide per square metre.

As will be set out in more detail below the polymer may be derived from a range of monomers. The packaging material may be a foldable material such as paper or card. The packaging material will often be supplied in reeled web form.

In a second aspect as described in claim 11 the invention provides a process for treatment of a packaging material comprising incorporating a fungicide into polymer particles of a polymeric coating material and then coating the packaging material with the coating material. Although applied as a surface coating, the invention is not restricted to coating material which remains exposed on the surface to which it was applied. It may be covered by a further coating, e.g. overprinted with ink.

### DETAILED DESCRIPTION OF THE INVENTION AND PREFERRED EMBODIMENTS

The invention is advantageous in several ways. It enables the use of fungicides which otherwise could not be regarded as satisfactory because of their tendency to migrate. It thus enlarges the range of fungicides available for use. It also allows fungicide to be applied to the paper or other cellulosic material after production, rather than at the paper or board mill, thus making it unnecessary to handle fungicide in the environment of the paper or board mill - which some mills are unwilling to do.

It is a feature of this invention that the fungicide is trapped within the polymer particles. Three techniques are envisaged to accomplish this.

Method A, which is preferred is to synthesize a polymer latex by emulsion polymerisation in the presence of the fungicide. The monomers used may include some polyfunctional monomer so as to produce cross linking in the polymer. However, there should desirably be cross linking between less than 3% by number of the monomer residues and more preferably between 1 and 2% of the monomer residues. This leads to a latex with good film forming properties. The polymer particle size range is preferably between 50 and 200 nanometres.

Method B, is to commence with a pre-formed cross linked polymer latex as a dispersion in liquid, e.g. water. The fungicide is dissolved in an organic solvent which is able to swell the polymer particles. The solution is brought into contact with the polymer latex, causing the polymer particles to swell. The fungicide enters the swollen particles. The solvent is then evaporated, leaving the fungicide trapped in latex particles.

Method C, is to convert a linear polymer to a latex in the presence of the fungicide. This can be done by dissolving the polymer, an emulsifying surfactant and the fungicide in a low boiling water-immiscible solvent, forming an emulsion of this in excess water and then removing the solvent.

For any of these procedures the polymer should be capable of forming a colloidal emulsion in water. Various polymerisation methods may be used for making polymers.

Suitable monomers for radical addition polymerisation are those containing polymerisable olefinic unsaturation. Monomers which may be used include styrene, vinyl acetate, ethylene, propylene, vinyl pyrrolidone, vinyl chloride, acrylonitrile, methyl methacrylate, and other acrylates and methacrylates. The monomers may be used either singly or in combination. Examples of polyfunctional monomers which may be used to effect cross-linking include divinyl benzene, divinyl ether, ethyleneglycol dimethacrylate penta-erythritol triacrylate and polyallyl sucrose. Suitable radical initiators include sodium or potassium persulphate, 2,2'-azobis(amidinopropane) hydrochloride, dibenzoyl peroxide, 2,2'-azobisisobutyronitrile (AIBN) and 4,4'-azobis(4-cyanovaleric acid). A water soluble initiator is preferable. Polymerisation temperature is preferentially in the range 40-90°C.

For Method B, it is possible to use natural and modified natural polymers, e.g. cellulose, modified cellulose, cellulose acetate, cellulose butyrate and hydroxy ethyl cellulose.

When Method A is used, the fungicide should preferentially be soluble in the monomer, for Method B, the fungicide should also be compatible with the polymer itself. This prevents phase separations which may cause problems.

It may be desired to use two (or more) fungicides to give a broader spectrum of antifungal activity. If so there are two possible approaches. The fungicides may be mixed together and then trapped within polymer particles. Alternatively each fungicide may be trapped in a separate latex and these latices mixed before application as a surface coating. It would also be possible to apply such latices as separate coatings, one on top of another. However this is less convenient and not, therefore, preferred.

The invention is not limited to any particular fungicide, but it will generally be desirable to employ a fungicide which has low toxicity towards man.

Examples of fungicides which may be used are:
di-iodomethyl-p-tolylsulphone, available from Angus Chemical Company under the Registered Trade Mark AMICAL
2-(thiocyanomethylthio) benzothiazole available from Buckman Laboratories Ltd under the Registered Trade Mark BUSAN 30WB
2,3,5,6 tetrachloro-4-(methyl sulphonyl) pyridine, supplied by ICI under the Registered Trade Mark DENSIL S
3-iodo-2-propynyl butyl carbamate, supplied by Troy Chemical Corporation under the Registered Trade Mark POLYPHASE P100.

Two fungicides which are currently used by incorporation at the paper or board mill, and which could be applied in a polymer coating in accordance with this invention are:
Carbendazim, which is methyl benzimidazol-2-yl carbamate, available from Intace under the Registered Trade Mark INTACE B350;
2-(4-thiazolyl)-1H-benzimidazole, available from Chemviron Speciality Chemicals under the Registered Trade Mark METASOL TK100.

The packaging material which is given a fungicidal coating in accordance with this invention will usually be a laminar material in sheet or web form. The material will generally be fibrous, based on cellulose fibres, but other fibres may be included. Examples of foldable cellulosic laminar materials include paper, carton board and corrugated board. Other laminar packaging materials include cellulosic film and heat sealable multi-layer laminates used for making sachets.

Application of the coating to the packaging material can be carried out by conventional techniques used by a paper or board mill to apply surface coatings, or it can be applied by the paper or board converter using printing techniques such as rotogravure, flexographic printing and offset litho. Coating may be carried out while the paper or board is still in the form of a continuous web, Or after it has been cast into individual sheets.

Frequently the packaging material will be coated On one side only, which will be the side facing towards the product which is packaged. This will place the fungicide in position to prevent growth starting in the packaging material but then continuing in the product itself.

The other surface of the packaging material may be left without fungicidal coating and instead printed in a conventional manner. However, the coating can be applied on both sides of the material if necessary and can be subsequently overprinted. It is not preferred to apply the coating on top of conventional printing, although to do so is a possibility within the scope of this invention.

As already mentioned the invention is particularly envisaged for paper and card used to wrap detergent compositions. These may be in bar form, e.g. soap bars, but may be powders or liquids. The fungicidal coating is applied to the inner surface of a soap bar wrapper, or more correctly it is applied to a surface of the packaging material which becomes the inner surface of the wrapper. A stiffener is conventionally used between the wrapper and the soap bar. This can also receive a fungicidal coating in accordance with this invention, preferably on both surfaces. The fungicide is then adjacent the bar surface, but because it is held by the polymer it does not migrate into the bar itself.

The amount of coating which is applied to a surface will depend on the concentration of fungicide in the coating, and the efficacy of the fungicide. As mentioned above it should be such as to apply from 0.001 to 1.0 grams of fungicide per square metre. Preferably the amount is at least 0.005 grams per square metre. It may well not exceed 0.5 or even 0.3 gram per square metre.

### Comparative Example

The fungicide BUSAN 30WB was dispersed in water to give a concentration of 0.1% by weight. Paper which was not treated or impregnated with any other fungicide was coated with the dispersion of fungicide using a K bar coater. This is essentially a bar spirally wound with stainless steel wire which is drawn across the paper while pressed against it by a standard weight; the coating composition is placed along the leading edge of the bar which leaves a thin layer as it is drawn across the surface of the paper. In this example the coater applied a coating of approximately 10 grams per square metre. Thus the quantity of fungicide on the paper was approximately 0.01 grams per square metre.

The coating was allowed to dry after which a sample was cut from the centre of the sheet and subjected to a fungal challenge test. For this test, a sample of paper was placed on an agar plate where it covered a central area leaving a substantial uncovered area around it. The plate and paper were inoculated by spreading a solution of fungal spores over the exposed surface, using a glass spreader. The inoculum contained about 10⁷ spores per gram.

The plate was then incubated for 48 hours at 28°C. At the end of this time there was substantial growth, almost completely covering an area around the periphery of the plate. In a central region of the plate, including the area covered by the paper, there was no visible fungal growth. This demonstrated that the fungicide was very effectively inhibiting fungal growth. However, the area of no growth was considerably larger than the area of the paper placed on the plate, showing that the fungicide had diffused out of the paper into the surrounding agar, creating a "zone of inhibition" around the paper.

This test procedure was carried out using each of two fungal species, in one case Aspergillus niger and in the other Penicillium notatum. The same result was obtained in each case.

### Example 1

### This example used Method A.

The fungicide BUSAN 30WB was incorporated into a polymethyl methacrylate latex.

Polymerisation was carried out in a reaction vessel (round bottomed flask) fitted with stirrer, nitrogen inlet tube and reflux condenser. The materials employed were:
- 19.0g: methyl methacrylate
- 1.0g: sodium dodecyl sulphate
- 1.0g: BUSAN 30WB (as 3.3g of 30% aqueous dispersion)
- 0.2g: polymerisation initiator which was 4,4'-azobis(4-cyanovaleric acid), sodium salt
- 80 ml: water.

The maximum amount of fungicide which can be encapsulated is limited by its solubility in methyl methacrylate monomer.

The surfactant was dissolved in the water (80 ml) and the solution degassed. The fungicide was dissolved in the methyl methacrylate and the resulting solution was added to the surfactant solution in the flask. The contents of the flask was stirred for ten minutes after which the polymerisation initiator in the remaining water was added and stirring continued for 6 to 8 hours while the contents of the flask were heated to 70°C. Emulsion polymerisation took place during this time giving a latex consisting of a colloidal suspension of polymer in the water. A measurement of solids content was performed on the latex to determine the amount of microencapsulated fungicide.

### Example 2

The latex from Example 1 was coated onto paper at a coating level of approximately 10 grams per square metre by means of K bar coater. The amount of fungicide on the paper was therefore 0.1 grams per square metre. The coating of latex was allowed to dry at room temperature after which a sample portion was cut from a central area of the paper.

This sample was subjected to a fungal challenge test as described in the comparative example. Again the result was that fungal growth was not seen on or beneath the paper sample (complete inhibition by fungicide). However, there was no "zone of inhibition" around the paper. Extensive fungal growth covered the agar surface right up to the edge of the paper.

Thus the fungicide was held by the latex and was unable to diffuse out into the agar to any substantial extent. Yet, it was effective as a fungicide despite being enclosed by the polymer latex.

### Example 3

The procedure of Example 1 was repeated using the fungicide AMICAL in place of the fungicide used in Example 1. The resulting latex was mixed with an equal quantity of latex prepared as in Example 1 so as to give a latex containing equal amounts of the two fungicides AMICAL and BUSAN 30WB.

The resulting mixture was coated onto paper in accordance with the procedure of Example 2. A sample of the resulting coated paper was subjected to a fungal challenge test as described in the comparative example above. The result was the same as that in Example 2, namely that there was no fungal growth on or beneath the paper sample but there was also no migration of fungicide into the surrounding agar.

### Example 4

Examples 1 and 2 were repeated using DENSIL S in place of BUSAN 30WB with very similar results.

## Claims

1. Fungicidally treated laminar, cellulosic packaging material characterised in that the fungicide is trapped within particles of a polymer which is a surface coating or printing on the packaging material, the coating or printing containing 0.001 to 1.0 gram fungicide per square metre.

2. Packaging material according to claim 1, wherein the polymer is an addition polymer of one or more olefinic monomers.

3. Packaging material according to claim 1, wherein the polymer is a condensation polymer.

4. Packaging material according to claim 1, wherein the polymer is a natural polymer or a chemically modified natural polymer.

5. Packaging material according to claim 1, which is paper, carton board, corrugated board or other cellulosic fibre board or cellulosic film.

6. Packaging material according to claim 1, wherein the surface coating is applied to one surface only of the laminar material.

7. Packaging material according to claim 1, wherein the surface coating is applied to both surfaces of the laminar material.

8. Packaging material according to claim 1, wherein the surface coating is applied at least to one surface of the sheet material and printing is applied to the opposite surface.

9. Use of the packaging material according to claim 1 for enclosing a detergent composition.

10. Use according to claim 9 for wrapping a detergent composition in bar form.

11. A process for treatment of a laminar, cellulosic packaging material comprising trapping a fungicide in particles of a polymeric coating material and then coating or printing the packaging material with the coating material, the coating or printing containing 0.001 to 1.0 gram fungicide per square metre.

## Patentansprüche

1. Fungizid-behandeltes laminares cellulosisches Verpackungsmaterial, dadurch gekennzeichnet, daß das Fungizid innerhalb von Teilchen eines Polymeren eingefangen ist, welches eine Oberflächenbeschichtung oder ein Druck auf dem Verpackungsmaterial ist, wobei die Beschichtung oder der Druck 0,001 bis 1,0 Gramm Fungizid pro Quadratmeter enthalten.

2. Verpackungsmaterial nach Anspruch 1, worin das Polymere ein Additionspolymeres von einem oder mehreren olefinischen Monomeren ist.

3. Verpackungsmaterial nach Anspruch 1, worin das Polymere ein Kondensationspolymeres ist.

4. Verpackungsmaterial nach Anspruch 1, worin das Polymere ein natürliches Polymeres oder ein chemisch modifiziertes natürliches Polymeres ist.

5. Verpackungsmaterial nach Anspruch 1, welches Papier, Kartonpappe, gewellte Pappe oder andere cellulosische Faserpappe oder cellulosischer Film, ist.

6. Verpackungsmaterial nach Anspruch 1, worin die Oberflächenbeschichtung auf eine Oberfläche nur auf dem laminaren Material aufgebracht ist.

7. Verpackungsmaterial nach Anspruch 1, worin die Oberflächenbeschichtung auf beide Oberflächen des laminaren Materials aufgebracht ist.

8. Verpackungsmaterial nach Anspruch 1, worin die Oberflächenbeschichtung auf zumindest einer Oberfläche des Blattmaterials aufgebracht ist und das Bedrucken auf der gegenüberliegenden Oberfläche aufgebracht ist.

9. Die Verwendung des Verpackungsmaterials nach Anspruch 1 für das Einkapseln einer Detergenszusammensetzung.

10. Die Verwendung nach Anspruch 9 für das Einhüllen einer Detergenszusammensetzung in Stabform.

11. Ein Verfahren zur Behandlung eines laminaren, cellulosischen Verpackungsmaterials, umfassend das Einfangen eines Fungizids in Teilchen eines polymeren beschichteten Materials und anschließend Beschichten oder Bedrucken des Verpackungsmaterials mit dem beschichteten Material, wobei die Beschichtung oder Bedruckung 0,001 bis 1,0 Gramm Fungizid pro Quadratmeter enthält.

## Revendications

1. Matériau d'emballage cellulosique en feuille traité de manière fongicide, caractérisé en ce qu'on piège le fongicide dans des particules d'un polymère qui est déposé en surface ou imprimé sur le matériau d'emballage, le revêtement ou l'impression contenant 0,001 à 1,0 gramme de fongicide par mètre carré.

2. Matériau d'emballage selon la revendication 1, où le polymère est un polymère d'addition d'un ou plusieurs monomères oléfiniques.

3. Matériau d'emballage selon la revendication 1, où le polymère est un polymère de condensation.

4. Matériau d'emballage selon la revendication 1, où le polymère est un polymère naturel ou un polymère naturel modifié chimiquement.

5. Matériau d'emballage selon la revendication 1, qui est du papier, du carton, du carton ondulé ou un autre carton de fibre cellulosique ou un film cellulosique.

6. Matériau d'emballage selon la revendication 1, où on applique le revêtement de surface seulement sur une face du matériau en feuille.

7. Matériau d'emballage selon la revendication 1, où le revêtement de surface est appliqué sur les deux faces du matériau en feuille.

8. Matériau d'emballage selon la revendication 1, où le revêtement de surface est appliqué au moins sur une face du matériau en feuille et on imprime sur l'autre face.

9. Utilisation du matériau d'emballage selon la revendication 1 pour emballer une composition détergente.

10. Utilisation selon la revendication 9 pour emballer une composition détergente sous forme de barre.

11. Procédé de traitement d'un matériau d'emballage cellulosique en feuille comprenant le piégeage d' un fongicide dans des particules d'un matériau de revêtement polymère et ensuite de recouvrir ou d'imprimer le matériau d'emballage avec le matériau de revêtement, le revêtement ou l'impression contenant 0,001 à 1,0 gramme de fongicide par mètre carré.
